# EUROPEAN PATENT SPECIFICATION

(11) **EP 3 819 825 B1**
(45) Date of publication and mention of the grant of the patent: **05.07.2023**
(21) Application number: 20207029.8
(22) Date of filing: 11.11.2020
(51) Int. Cl.: G06K 19/02, G06K 19/07, B32B 27/36, G06K 19/06, G06K 19/077

(54) **IMPROVED CARD AND METHOD FOR MANUFACTURING SAID CARD**
VERBESSERTE KARTE UND VERFAHREN ZUR HERSTELLUNG DER KARTE
CARTE AMÉLIORÉE ET PROCÉDÉ DE FABRICATION DE LADITE CARTE

(30) Priority: 11.11.2019 IT 201900020733
(43) Date of publication of application: 12.05.2021
(73) Proprietor: MF Group S.r.l., 40036 Monzuno (BO) (IT)
(72) Inventor: MUCELLI, Sandro, 40036 Monzuno (BO) (IT)
(74) Representative: Cataldi, Giulia

(56) References cited:
- WO-A1-2018/206927
- WO-A2-2009/121793
- DE-A1-102009 035 415
- US-A- 5 928 788
- US-A1- 2015 191 037
- Anonymous: "Introduction to PETF", , 31 December 2011 (2011-12-31), XP055302386, Retrieved from the Internet: URL:http://europe.dupontteijinfilms.com/me dia/56672/petf_for_durable_cards.pdf [retrieved on 2016-09-14]

## Description

### TECHNICAL FIELD

The invention relates to a multi-layer card and to a method for manufacturing said card.

In particular, the invention relates to a card, such as for example a credit card, a debit card (also known as ATM card), a health insurance card, a fidelity card, a key card, etc.

Hence, the term "card" basically identifies each type of card or badge provided or not provided with a microchip and/or with a magnetic band and/or with an antenna.

### PRIOR ART

The card generally is a flat body typically measuring circa 9 cm by 6 cm. If the card is provided with an electronic device, such as for example a microchip and/or a magnetic band and/or an antenna, it is capable of processing and/or storing data for identification/authentication systems or the like.

As it is known, a card can comprise the (optional) microchip, which is connected to an outer connection interface by means of electrical contacts or by means of an antenna buried in it. The microchip, when present, provides a data calculation and storing capacity and the electrical contacts or the antenna allow the microchip to communicate with a special outer reading terminal.

Said cards, such as for example credit cards, debit cards (also known as ATM cards), health insurance cards, fidelity cards, key cards, etc., are usually made of polyvinyl chloride (commonly known as PVC). Polyvinyl chloride (PVC) is a polymer that is widely used for manufacturing different objects, among which there are said cards. However, polyvinyl chloride (PVC), despite being classified as a recyclable plastic, is only partially recycled (very small percentages compared to other types of plastics) due to the high treatment costs it requires. Therefore, the articles made of polyvinyl chloride (PVC) (which are different from PVC packagings) must be collected by users as dry mixed and undifferentiated waste, which is disposed of and not recycled.

For example, document WO2018206927 describes a multi-layer card, which comprises a central layer without antenna and made of a polymer material, two peripheral layers made of polyester (for example PET) and two outer layers made of a polymer material. Between the central layer, each peripheral layer and each outer layer there is interposed a respective layer of heat-sealable copolyester. Document WO2018206927 does not discuss the problem of the environmental impact of the card and of the possibility of recycling it. Furthermore, document WO2018206927 does not specify that the materials used to manufacture the multi-layer card are recycled and recyclable materials. Indeed, the multi-layer card described in document WO2018206927 is a typical card that needs to be disposed of with the dry mixed and undifferentiated waste and cannot be recycled. Claim 1 is delimited against document WO2018206927.

From document US5928788A is known a multi-layered card comprising thermally non-recrystallizing polyester. Document US5928788 does not disclose that the multi-layered card has an antenna embedded into the central liner.

From document US2015191037A1 is known a multi-layered card comprising a multi-layered blank made of commonly used material and provided with an antenna. The antenna is not embedded in the core layer. An inkjet printed layer is applied on only one surface of the multi-layered blank, which in turn is provided with a polymer cover layer.

Also document DE102009035415 discloses a multi-layered card provided with a multi-layered core obtained by lamination and on both sides of which respectively three further layers are applied. The layers are made by commonly used materials.

Document WO2009121793 discloses a lamination process for producing laminates for multi-layered cards.

From the non-patent literature "introduction to PETF" of DuPont Teijin Films are known the technical features of a biaxially oriented PET (indicated ad PETF). From this non-patent literature is clarified that PETF has different technical characteristics as well as mechanical behaviour than common PET or PETG and that PETF is usually combined with other materials.

It is therefore evident that as a consequence of the fact that the number of card owned by users in their wallets increases and taking into account the limited duration thereof (which can range from some days, which is the case, for example, with key cards, to several years, which is the case, for example, with credit cards, debit cards, identity cards), the environmental impact thereof increases as well.

Therefore, given the more and more stringent international rules applied in this field (also in terms of environmental impact and, hence, of recycling and disposal, for example, of plastic materials), currently known cards need to be modified so as to fulfil more and more stringent sustainability requirements.

### DESCRIPTION OF THE INVENTION

Therefore, the object of the invention is to provide a multi-layer card and a method for manufacturing said card, which are not affected by the drawbacks of the prior art and are easy and economic to be manufactured and implemented.

According to the invention, there is provided a multi-layer card according to the appended claims.

According to the invention, there is also provided a method for manufacturing said card according to the appended claims.

### BRIEF DESCRIPTION OF THE DRAWINGS

The invention will be best understood upon perusal of the following description of an embodiment provided by mere way of non-limiting example, wherein:
- figure 1 is a schematic plan view of a card according to the invention;
- figure 2 is a cross-section view along line II-II of figure 1;
- figure 3 is a schematic perspective view of a feeding step for feeding the first layers;
- figure 4 is a schematic perspective view of a feeding step for feeding further material layers according to the invention;
- figure 5 is a cross-section view of the different overlapping layers before the final rolling;
- figure 6 is a schematic perspective view of the semi-finished product obtained according to the invention; and
- figure 7 is a flowchart of the single steps of the manufacturing method.

### PREFERRED EMBODIMENTS OF THE INVENTION

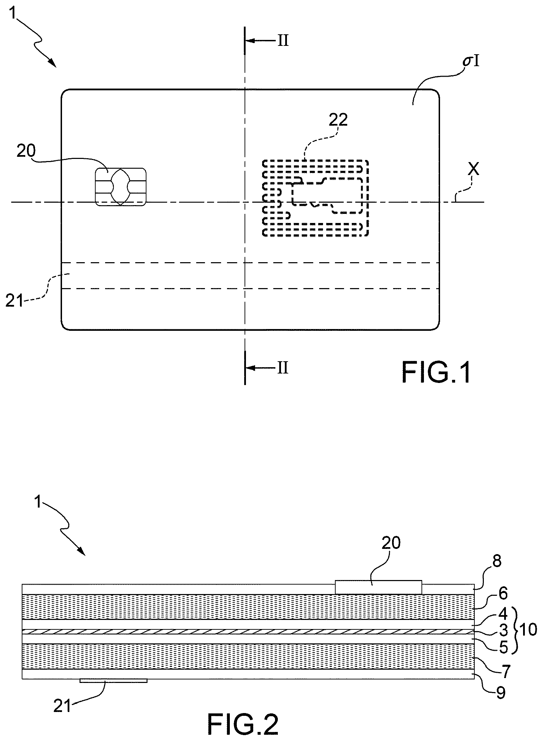

In figure 1, number 1 generically indicates, as a whole, a card for an identification/authentication system. The card 1 of the invention could be for example (non-exhaustive list): a credit card, a debit card (also known as ATM card), a health insurance card, a fidelity card, a key card, etc.

The card 1 is a flat body, namely it has two main dimensions and a minor dimension (the thickness).

The card 1 has two main surfaces opposite one another, which are hereinafter referred to, for greater clarity (but not in a limiting manner), as front surface σI and rear surface σII. Information concerning the card 1 (for example, name of the bank or of the institute releasing the card) is usually printed on the front surface σI. Secondary information is usually printed on the rear surface σII, which generally houses a magnetic band, as described more in detail below.

According to the example shown in figure 1, the card 1 has, in plan view, a substantially rectangular shape and has a longitudinal axis X. Without losing in generality, according to variants which are not shown herein, the card 1 can have different shapes. In a known manner, the card 1 advantageously has rounded corners.

According to a possible embodiment, the card 1 is not provided with a microchip 20 and with a magnetic band 21.

In this case, data is read by means of an antenna 22, for example a RFID (*Radio-frequency identification*) or NFC (*Near Field Communication*) antenna, which is buried in the card 1. This operation is used, for example, in contactless reading modes.

According to a further possible embodiment, some cards 1, in order to increase their safety during the exchange of data, thus avoiding undesired cloning, are provided with a magnetic band 21, which typically comprises a polymer layer and a plurality of magnetic resin particles buried in it.

Through the magnetic band 21, data can be stored and/or read in the card 1.

In figure 1, the magnetic band 21 is indicated with a broken line, since it is arranged on the rear surface σII of the card 1. The magnetic band 21 typically extends parallel to the axis X.

According to a further possible embodiment, some cards 1, which require a further safety in the exchange of data, can be provided with a microchip 20 (shown, for example, in figure 1), which can contain many items of information in the form of cryptograms, which, hence, prevent unauthorized users from reading the card 1.

According to a further possible embodiment, some cards 1, which require a very high degree of safety in the exchange of data (such as, for example, credit cards or debit cards), are provided with the microchip 20 (shown, for example, in figure 1), with the magnetic band 21 (indicated, for example in figure 1) and also with the antenna 22 (indicated, for example, in figure 1).

To sum up, the card 1 according to the invention must comprise at least one element chosen from among: the antenna 22, the magnetic band 21 and the microchip 20, depending on the degree of safety to be guaranteed and on the sensitivity of the data/information contained in the card 1.

The card 1 is a multi-layer card, namely it is manufactured by overlapping and connecting different layers of material, which can be different from one another (for example, in terms of type of material, thickness, density, etc.).

The card 1 comprises three or more layers of material overlapping and joined to one another. Each layer, similarly to what disclosed above for the entire card 1, is a flat body, namely has two main dimensions and a minor dimension (the thickness). Each layer has, in plan view, a shape that it substantially similar to the shape of the finished card 1. Each layer has a front surface σI and a rear surface σII, similarly to what disclosed above.

The card 1 preferably comprises at least five layers of material overlapping and joined to one another.

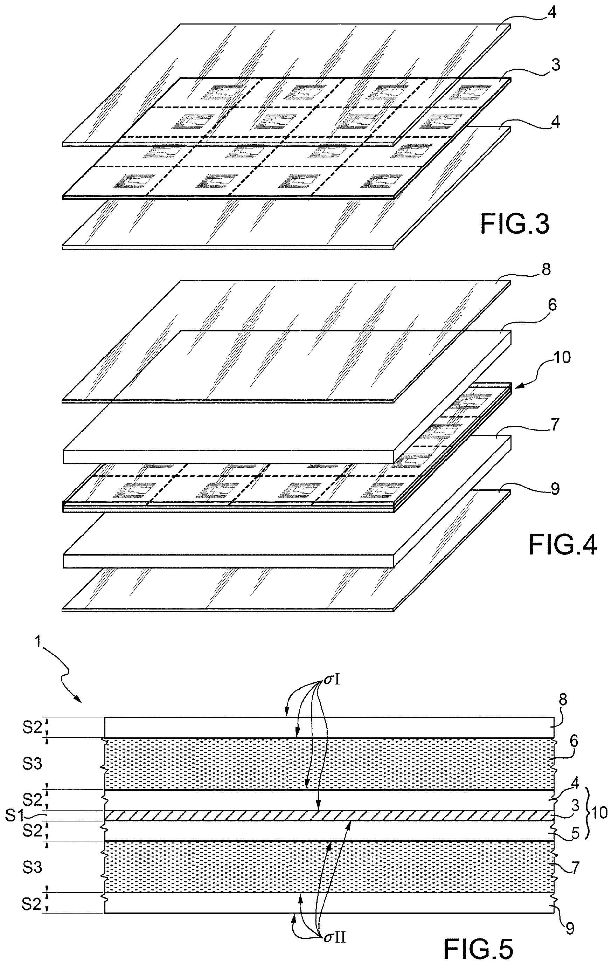

According to the embodiment shown in the accompanying figures, the card 1 comprises seven layers of material overlapping and joined to one another (figure 2). In particular, according to an embodiment shown in figures 2 and 5, the card 1 comprises: a central layer 3; two intermediate layers 4 and 5, each arranged on opposite sides (front/rear sides) of the central layer 3; two peripheral layers 6 and 7, each arranged on a respective side (front/rear side) of the intermediate layer 4 or 5; and two outer layers 8 and 9, each arranged on a respective side (front/rear side) of the peripheral layer 6 or 7. Therefore, the layers 4, 6, 8 and - similarly - the layers 5, 7, 9 are arranged in a symmetrical manner relative to the central layer 3.

By "side" we means the position of any one of the layers described above relative to the central layer 3. In other words, the layers 4, 6, 8 are applied on the front surface σI of the central layer 3 (hence, they are placed on the front side of the card 1); whereas the layers 5, 7, 9 are applied on the rear surface σII of the central layer 3 (hence, they are placed on the rear side of the card 1).

The central layer 3 and the two intermediate layers 4 and 5 define a central support 10 of the card 1. In other words, the central support 10 comprises the central layer 3 provided with the antenna 22 (shown with a broken line in figure 1 and not shown in figure 2) and two intermediate layers 4 and 5, each arranged on, namely overlapping, the front surface σI and the rear surface σII, respectively, of the central layer 3, as shown in figure 3.

According to figure 4, a peripheral layer 6 or 7 is respectively arranged on two opposite sides (front/rear sides) of the central support 10. In addition, an outer layer 8 or 9 is arranged on, namely overlaps, an outer side of the peripheral layers 6 and 7, respectively. In other words, the card 1 is provided with two outer layers 8 and 9, each arranged on a respective side (front/rear side) of the peripheral layer 6 and 7.

The central layer 3 is advantageously manufactured with, namely made of, polyester (which, as it is known, also comprises polyethylene terephthalate (PET)).

According to an alternative embodiment, the central layer 3 is manufactured with, namely made of, recycled polyethylene terephthalate glycol-modified (PET-g).

According to an embodiment that is not part of the invention, the two intermediate layers 4 and 5, the two peripheral layers 6 and 7 and the two outer layers 8 and 9 are manufactured with, namely made of, polyethylene terephthalate (PET).

According to the invention, the two intermediate layers 4 and 5, the two peripheral layers 6 and 7 and the two outer layers 8 and 9 are manufactured with, namely made of, recycled polyethylene terephthalate glycol-modified (PET-g).

The two intermediate layers 4 and 5 and the two outer layers 8 and 9 advantageously are transparent and can be lucid or opaque.

The two peripheral layers 6 and 7 advantageously comprise white pigments, in particular of titanium dioxide.

According to an alternative embodiment, the two peripheral layers 6 and 7 have a print, which is applied, for example, by means of laser printing, offset printing, screen printing or digital printing. In particular, the print is applied on the front surface σI of the peripheral layer 6 and on the rear surface σII of the peripheral layer 7. In particular, the print can comprise drawings, letters, numbers, signs, logos, etc.

The multi-layer card 1 advantageously has a total thickness, after a rolling method, ranging from 700 to 900 mµ, in particular ranging from 800 to 850 mµ, for example equal to 820 mµ.

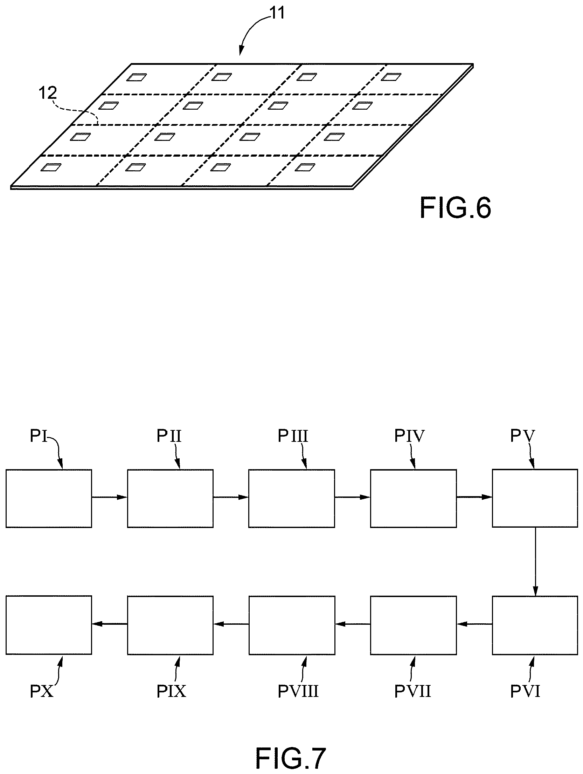

The card 1 described above is produced with the following manufacturing method schematically shown with the flowchart of figure 7, which shows the different steps thereof. During the method described below, each layer 3-9 is advantageously fed in sheets (as schematically shown in figures 3-6), so that a plurality of cards 1 can be simultaneously manufactured along a production line L1. According to a variant which is not shown herein each layer can be fed by means of band reels.

As figure 7 schematically shows, the method comprises a plurality of steps PI-PX, which are described in detail below. The method comprises an initial step (PI) of providing the central layer 3, provided with the antenna 22, and the two intermediate layers 4 and 5, according to figures 3 and 6.

In particular, the central layer 3 has an initial thickness S1 ranging from 25 to 150 mµ, the initial thickness S1 preferably being of approximately 40 mµ.

By "initial thickness" we mean the thickness of a layer when it is fed, namely upstream of the rolling process. In other words, the initial thickness is greater than the final thickness, namely than the thickness of a layer downstream of the rolling process.

Generally speaking, the antenna 22 is already applied on the central layer 3. Advantageously, the antenna 22 preferably is a metal filament, in particular made of aluminium or copper, which is printed onto the central layer 3.

Each layer 4 and 5 has an initial thickness S2 ranging from 65 to 105 mµ, the initial thickness S2 preferably being of approximately 85 mµ.

The intermediate layers 4 and 5 are advantageously provided with an adhesive, which can be heat-activated, in particular the adhesive can be activated at temperatures of at least 90°C. The adhesive (not shown) is preferably applied on the entire surface of each intermediate layer 4 and 5 and allows it to be connected to the layer 3, ensuring a perfect grip.

According to figure 3, each intermediate layer 4 and 5 is applied on the central layer 3, in particular the intermediate layer 4 s applied on the front surface σI of the central layer 3, whereas the intermediate layer 5 is applied on the rear surface σII. In other words, the three layers 3, 4 and 5 are overlapped on top of one another, with the layers 4 and 5 on the outside.

Subsequently, the a pre-connection (PII) and a pre-rolling (PIII, PV) of the three layers 3, 4 and 5 are carried out, so that said layers are fixed to one another in order to form the central support 10.

During the pre-connection step (PII), the three layers 3, 4 and 5 are advantageously stabilized relative to one another, so as not to have undesired movements thereof during the following pre-rolling step (PIII, PV).

The three layers 3, 4 and 5 are advantageously connected to one another by means of an ultrasound welding, which is carried out in one or more areas of the layers (PII).

Then, there is a pre-rolling step (PIII, PV).

The pre-rolling step takes place in two stages, namely, at first, with a first stage at a temperature T1 ranging from 90 to 140°C and with a pressure p1 ranging from 60 to 150 bar (PIII). As mentioned above, the heat-activated adhesive (present on the layers 4 and 5) is activated at a temperature of at least 90°C. Therefore, the temperature T1 of the pre-rolling activates the adhesive.

In other words, at the temperature T1, there is the cross-linking of the adhesive, which, hence, forms a permanent structural bond between the two layers to be connected.

Therefore, through the pre-rolling, the central support 10 is obtained, which comprises three layers 3, 4 and 5 of material.

Subsequently, there is a cooling step (PIV) up to a temperature T2 ranging from 15 to 40°C, preferably up to 20°C.

Then, there is the second pre-rolling stage (PV), during which a rolling is carried out with a second pressure p2 ranging from 100 to 200 bar and a temperature ranging from 15 to 40°C.

At this point, as figure 4 schematically shows, the layers 6-9 are fed (PVI) onto both surfaces σI and σII of the central element 11. Said layers, as described more in detail below, can be applied one after the other or simultaneously.

In particular, a peripheral layer 6 or 7 and an outer layer 8 or 9 are overlapped, respectively. In other words, according to figure 2, four further layers 6-9 of material are overlapped (two layers per front/rear side, namely the layers 6 and 8 on the front surface σI and the layers 7 and 9 on the rear surface σII).

Each peripheral layer 6 and 7 has an initial thickness S3 ranging from 200 to 250 mµ, the initial thickness S3 preferably being of approximately 220 mµ.

Each layer 8 and 9 has an initial thickness S2 ranging from 65 to 105 mµ, the initial thickness S2 preferably being of approximately 85 mµ.

The outer layers 8 and 9 are advantageously provided with an adhesive, which can be heat-activated, in particular the adhesive can be activated at temperatures of at least 90°C. The adhesive (not shown) is preferably applied on the entire surface of each layer 8 and 9 and allows it to be connected to the respective other layer 6 and 7 facing it, ensuring a perfect grip.

If the card 1 is provided with a magnetic band 21, it is advantageously applied on the outer layer 9.

In other words, when the outer layer 9 is placed on top the layer 7, it already has the magnetic band 21 applied.

Subsequently, the final rolling (PVIII, PX) of all seven layers 3-9 is carried out, said layers being arranged as indicated in figures 2 and 5. Similarly to the pre-rolling, during the final rolling, the overlapping layers 6-10 are joined to one another through a connection step (PVII) and two successive rolling steps (PVIII and PX), which are spaced apart from one another by a cooling step (PIX).

In order to hold the layers 6-10 in position during the following rolling steps, they advantageously are preliminarily connected to one another, for example by means of an ultrasound welding (PVII). In particular, thanks to this connection, the central support 10 is connected to the layers 6-9, which, hence, cannot make undesired movements relative to one another during the following rolling steps.

The final rolling step (PVIII, PX) is carried out in two stages, similarly to the pre-rolling step.

At first, a first rolling stage (PVIII) is carried out at a temperature T1 ranging from 90 to 140°C and with a pressure ranging from 60 to 150 bar.

In this case, again, the heat-activated adhesive, which is present on the outer layers 8 and 9, like the adhesive applied on the intermediate layers 4 and 5, is activated at a temperature of at least 90°C.

Therefore, the temperature T1 of the final rolling activates the adhesive. In other words, at the temperature T1, there is the cross-linking of the adhesive, which, hence, forms a permanent structural bond between the two surfaces to be connected.

Then, there is a cooling step (PIX) up to a temperature T2 ranging from 15 to 40°C, preferably up to 20°C.

Subsequently, a second rolling step (PX) is carried out, which takes place at a temperature ranging from 15 to 40°C, preferably up to 20°C, and with a pressure p2 ranging from 100 to 200 bar.

It should be pointed out that the same temperature ranges T1, T2 and the same pressure ranges p1, p2 were indicated both for the pre-rolling and for the final rolling. However, the rolling processes do not necessarily need to be carried out in the same way. In other words, the actual values of the temperatures T1, T2 and/or of the pressures p1, p2 (comprised in the aforesaid ranges) can be the same or be different between the pre-rolling step (PIII, PV) and the final rolling step (PVIII, PX).

In other words, the values T1, T2, p1 and/or p2 of the pre-rolling (PIII, PV) can approximately correspond to the values T1, T2, p1 and/or p2 of the final rolling (PVIII, PX) or can be different from the values T1, T2, p1 and/or p2 of the final rolling (PVIII, PX).

Therefore, the final rolling produces a flat semi-finished product 11 (figure 6), in particular a multi-layer sheet, in which the single layers 3-9 are perfectly joined to one another. The respective cards 1 are then separated from the flat semi-finished product. The separation can take place, for example, by means of punching (die cutting), in figure 7 the cutting lines 12 are shown with broken lines by way of example.

According to a possible embodiment, once the magnetic cards 1 have been separated, they can be provided with letters, numbers and/or signs, for example projecting letters, numbers and/or signs, in particular by means of punching, or printed letters, numbers and/or signs, in particular by means of laser printing. In case the layers 6 and 7 have no print on them (namely, they are completely blank), the complete printing of the drawings, of the letters, of the numbers, of the signs, of the logos, etc. present on the card 1 can be carried out in this step.

According to a further embodiment, if the microchip 20 is provided, the card 1 (before its separation or even after that) is subjected to a local material removal processing, preferably by means of milling, in order to create the seat for the microchip 20. Subsequently, the microchip 20 is inserted into the seat.

The method for manufacturing the card 1 can comprise a further quality control step, during which operators can check whether pre-set dimensional, planarity, etc. requirements are fulfilled.

The method for manufacturing the card 1 can comprise a further packaging step, during which the card is packaged in order to be delivered to users.

The card 1 and the relative manufacturing method described above have a plurality of advantages.

Mainly, the card 1 has a low environmental impact, since it is almost entirely made (except for the microchip 20, the magnetic band 21 and the antenna 22) of polymers belonging to the polyester group (in particular polyethylene terephthalate glycol-modified (PET-g)), which can easily be recycled and can be collected with the plastic materials. Therefore, the material of the card 1 can be recycled and does not need to be collected with the dry mixed and undifferentiated waste, which is disposed of and not recycled.

The low environmental impact of the card 1 is also reached thanks to the fact that the card 1 (in particular, at least the layers 4 to 9, advantageously 3 to 9) is obtained from recycled materials, in particular from polyethylene terephthalate glycol-modified (PET-g), which further increase the percentage of recycled (and, preferably, newly recyclable) material up to 980.

Furthermore, the multi-layer card according to the invention, which is made of polyethylene terephthalate glycol-modified (PET-g), has technological features which are different from those of known cards made of polyethylene terephthalate (PET). In particular, polyethylene terephthalate glycol-modified (PET-g) is less fragile, softer, cold-bendable, more flexible and more resistant to hits than polyethylene terephthalate (PET). Furthermore, the two materials cannot be considered as mere alternatives, since the slabs of polyethylene terephthalate (PET) are obtained through extrusion and stretching (also known as "strain"), whereas the slabs of polyethylene terephthalate glycol-modified (PET-g) are obtained through extrusion or calendering. These different methods used to obtain the slab of material give different intrinsic features to the slab itself.

Hence, the manufacturing method according to the invention leads to the production of multi-layer cards, which use a recycled and recyclable material.

The card 1 has a good flexibility and does not permanently deform when it is subjected to a load applied to it, for example exerted by the wallet.

The card 1 is made of materials that are not toxic and do not release harmful substances. Indeed, polyethylene terephthalate (PET) is notoriously used also for food or beverage containers.

The card 1 is made of materials that are not inflammable. Indeed, polyethylene terephthalate glycol-modified (PET-g) has a great resistance to heat.

The card 1 fulfils the criteria set by the rules currently enforced, such as, for example, the standards ISO 7810; Test Method 10373-1-2, ISO 7811-12-4-5; ISO 7816-6-2, ANSI NC/TS 322 5.20, CQM Version 2.18 (09001), etc.

The manufacturing method described above has the advantage that, thanks to the double rolling, namely thanks to the pre-rolling and to the final rolling, it is possible to obtain a card 1 that has a total thickness that is substantially the same as the thickness of known cards 1, which have a smaller number of layers of material.

Furthermore, the manufacturing method leads to a card 1 having all the layers well fixed together, in compliance with the rules indicated above.

The manufacturing method produces a card 1 whose layers cannot detach themselves from one another.

The manufacturing method is carried out with temperatures and pressures that allow the single materials making up the card not to be degraded.

The manufacturing method, thanks to the presence of a cooling step (PIV) and of low-temperature processing processes (PV, PVI) interposed between the first rolling stage (PIII) of the pre-rolling and the first rolling stage (PVIII) of the final rolling, allows the connection/grip between the layers 3-5 of the central support 10 to be stabilized. Therefore, during the first rolling stage (PVIII) of the final rolling, the already consolidated adhesive is not activated again (namely, the previously defined structural bond is not broken); hence, during the final rolling, the grip of the layers of the central support 10 is not jeopardized, thus ensuring the strength and the final resistance of the card 1.

## Claims

1. A multi-layer card comprising:
a central support (10) comprising a central layer (3) and two intermediate layers (4, 5), each adhering to a respective surface (σI, σII) of the central layer (3);
two peripheral layers (6, 7), each adhering to a respective surface (σI, σII) of the central support (10); and
two outer layers (8, 9), each adhering to a respective surface (σI, σII) of a respective peripheral layer (6, 7);
the multi-layer card is **characterized in that** the central layer (3) is provided with an antenna (22) and **in that** the two intermediate layers (4, 5), the two peripheral layers (6, 7) and the two outer layers (8, 9) are made of recycled polyethylene terephthalate glycol-modified.

2. A card according to claim 1, wherein the central layer (3) is made of recycled polyethylene terephthalate glycol-modified and has a first initial thickness (S1) ranging from 25 to 150 mµ, preferably of approximately 40 mµ, and the antenna (22) is made of aluminium or copper.

3. A card according to claim 1, wherein the central layer (3) is made of polyester and has a first initial thickness (S1) ranging from 25 to 150 mµ, preferably of approximately 40 mµ, and the antenna (22) is made of aluminium or copper.

4. A card according to any one of the claims from 1 to 3, wherein each peripheral layer (6, 7) has a second initial thickness ranging from 200 to 250 mµ, preferably of approximately 220 mµ.

5. A card according to any one of the claims from 1 to 3, wherein the two peripheral layers (6, 7) comprise white pigments, in particular titanium dioxide.

6. A card according to any one of the claims from 1 to 5, wherein each intermediate layer (4, 5) and each outer layer (8, 9) has a third initial thickness (S3) ranging from 65 to 105 mµ, preferably of approximately 85 mµ.

7. A card according to any one of the claims from 1 to 6, wherein the two intermediate layers (4, 5) and the two outer layers (8, 9) are provided with a heat-activated adhesive, which, in particular can be activated at a temperature (T1, T2) of at least 90°C.

8. A card according to any one of the claims from 1 to 7, wherein the two peripheral layers (6, 7) have a surface (σI, σII) on which a print is applied; whereas, the two intermediate layers (4, 5) and the two outer layers (8, 9) are transparent.

9. A card according to any one of the claims from 1 to 8 and comprising a microchip (20) and/or a magnetic band (21) .

10. A method for manufacturing a card according to any one of the claims from 1 to 9; the method comprises the following steps:
providing a central layer (3) provided with an antenna (22) and two intermediate layers (4, 5), each arranged on a respective surface (σI, σII) of the central layer (3); the two intermediate layers (4, 5) are made of recycled polyethylene terephthalate glycol-modified;
carrying out a pre-rolling of the central layer (3) and of the two intermediate layers (4, 5) so as to obtain a central support (10);
placing two peripheral layers (6, 7), each arranged on a respective surface (σI, σII) of the central support (10); the two peripheral layers (6, 7) are made of recycled polyethylene terephthalate glycol-modified;
placing two outer layers (8, 9), each arranged on a respective peripheral layer (6, 7); wherein the two outer layers (8, 9) are made of recycled polyethylene terephthalate glycol-modified;
carrying out a final rolling of all material layers (3, 4, 5, 6, 7, 8, 9).

11. A method according to claim 10, wherein the pre-rolling step comprises a further sub-step of connecting, in particular by means of ultrasonic welding, the central layer (3) and the two intermediate layers (4, 5) to one another before carrying out the pre-rolling; and the final rolling step comprises a further sub-step of connecting, in particular by means of ultrasonic welding, all material layers (3, 4, 5, 6, 7, 8, 9) to one another before carrying out the final rolling.

12. A method according to claim 10 or 11 and comprising a further step of feeding the central layer (3) and the two peripheral layers (6, 7) in sheets.

13. A method according to any one of the claims from 10 to 12 and comprising a further step of feeding the two intermediate layers (4, 5) and the two outer layers (8, 9) in sheets or as a material band unwound from a reel.

14. A method according to any one of the claims from 10 to 13 and comprising the further step of separating each singular card (1).

15. A method according to any one of the claims from 10 to 14, wherein the pre-rolling step and/or the final rolling step are carried out with a first stage at a first temperature (T1) ranging from 90 to 140°C and with a first pressure (p1) ranging from 60 to 150 bar and with a second stage following a cooling down to a second temperature (T2) ranging from 15 to 40°C, preferably to 20°C, with a second pressure (p2) ranging from 100 to 200 bar.

## Patentansprüche

1. Eine mehrschichtige Karte, umfassend:
- einen zentralen Träger (10) mit einer zentralen Schicht (3) und zwei Zwischenschichten (4, 5), die jeweils an einer Oberfläche (σI, σII) der zentralen Schicht (3) haften;
- zwei periphere Schichten (6, 7), die jeweils an einer Oberfläche (σI, σII) des zentralen Trägers (10) haften; und
- zwei Außenschichten (8, 9), die jeweils an einer Oberfläche (σI, σII) einer entsprechenden peripheren Schicht (6, 7) haften;
wobei die mehrschichtige Karte **dadurch gekennzeichnet ist,**
**dass** die zentrale Schicht (3) mit einer Antenne (22) versehen ist und **dass** die beiden Zwischenschichten (4, 5), die beiden peripheren Schichten (6, 7) und die beiden Außenschichten (8, 9) aus recyceltem, mit Glykol modifiziertem Polyethylenterephthalat hergestellt sind.

2. Karte nach Anspruch 1, wobei die zentrale Schicht (3) aus recyceltem, mit Glykol modifiziertem Polyethylenterephthalat hergestellt ist und eine erste Ausgangsdicke (S1) im Bereich von 25 bis 150 µm, vorzugsweise von etwa 40 µm, aufweist und die Antenne (22) aus Aluminium oder Kupfer besteht.

3. Karte nach Anspruch 1, wobei die zentrale Schicht (3) aus Polyester besteht und eine erste Ausgangsdicke (S1) im Bereich von 25 bis 150 µm, vorzugsweise von etwa 40 µm, aufweist und die Antenne (22) aus Aluminium oder Kupfer besteht.

4. Karte nach einem der Ansprüche 1 bis 3, wobei jede periphere Schicht (6, 7) eine zweite Ausgangsdicke im Bereich von 200 bis 250 µm, vorzugsweise von etwa 220 µm, aufweist.

5. Karte nach einem der Ansprüche 1 bis 3, wobei die beiden peripheren Schichten (6, 7) aus Weißpigmenten, insbesondere Titandioxid, bestehen.

6. Karte nach einem der Ansprüche 1 bis 5, wobei jede Zwischenschicht (4, 5) und jede Außenschicht (8, 9) eine dritte Ausgangsdicke (S3) im Bereich von 65 bis 105 µm, vorzugsweise etwa 85 µm, aufweist.

7. Karte nach einem der Ansprüche 1 bis 6, wobei die beiden Zwischenschichten (4, 5) und die beiden Außenschichten (8, 9) mit einem wärmeaktivierbaren Klebstoff versehen sind, der insbesondere bei einer Temperatur (T1, T2) von mindestens 90°C aktiviert werden kann.

8. Karte nach einem der Ansprüche 1 bis 7, wobei die beiden peripheren Schichten (6, 7) eine Oberfläche (σI, σII) aufweisen, auf der ein Druck aufgebracht ist, während die beiden Zwischenschichten (4, 5) und die beiden Außenschichten (8, 9) transparent sind.

9. Karte nach einem der Ansprüche 1 bis 8, mit einem Mikrochip (20) und/oder einem Magnetband (21).

10. Verfahren zur Herstellung einer Karte nach einem der Ansprüche 1 bis 9, wobei das Verfahren die folgenden Schritte umfasst:
- Bereitstellen einer zentralen Schicht (3), die mit einer Antenne (22) versehen ist, und zweier Zwischenschichten (4, 5), die jeweils auf einer Oberfläche (σI, σII) der zentralen Schicht (3) angeordnet sind; wobei die beiden Zwischenschichten (4, 5) aus recyceltem, mit Glykol modifiziertem Polyethylenterephthalat bestehen;
- Vorwalzen der zentralen Schicht (3) und der beiden Zwischenschichten (4, 5), um einen mittleren Träger (10) zu erhalten;
- Anbringen von zwei peripheren Schichten (6, 7), die jeweils auf einer Oberfläche (σI, σII) des zentralen Trägers (10) angeordnet sind; wobei die beiden peripheren Schichten (6, 7) aus recyceltem, mit Glykol modifiziertem Polyethylenterephthalat bestehen;
- Anbringen von zwei Außenschichten, die jeweils auf einer entsprechenden peripheren Schicht (6, 7) angeordnet sind; wobei die beiden Außenschichten (8, 9) aus recyceltem, mit Glykol modifiziertem Polyethylenterephthalat bestehen;
- abschließendes Walzen aller Materialschichten (3, 4, 5, 6, 7, 8, 9).

11. Verfahren nach Anspruch 10, wobei der Vorwalzschritt einen weiteren Teilschritt des Verbindens, insbesondere mittels Ultraschallschweißen, der zentralen Schicht (3) und der beiden Zwischenschichten (4, 5) miteinander vor Durchführung des Vorwalzens umfasst; und der abschließende Walzschritt einen weiteren Teilschritt des Verbindens, insbesondere mittels Ultraschallschweißen, aller Materiallagen (3, 4, 5, 6, 7, 8, 9) miteinander vor Durchführung des abschließenden Walzens umfasst.

12. Verfahren nach Anspruch 10 oder 11, das einen weiteren Schritt umfasst, bei dem die zentrale Schicht (3) und die beiden peripheren Schichten (6, 7) in Bögen zugeführt werden.

13. Verfahren nach einem der Ansprüche 10 bis 12, bei dem die beiden Zwischenlagen (4, 5) und die beiden Außenlagen (8, 9) in Bögen oder als von einer Rolle abgewickeltes Materialband zugeführt werden.

14. Verfahren nach einem der Ansprüche 10 bis 13 mit dem weiteren Schritt der Vereinzelung jeder einzelnen Karte (1).

15. Verfahren nach einem der Ansprüche 10 bis 14, wobei der Vorwalzschritt und/oder der abschließende Walzschritt in einer ersten Stufe bei einer ersten Temperatur (T1) im Bereich von 90 bis 140°C und mit einem ersten Druck (p1) im Bereich von 60 bis 150 bar und in einer zweiten Stufe nach einer Abkühlung auf eine zweite Temperatur (T2) im Bereich von 15 bis 40°C, vorzugsweise auf 20°C, mit einem zweiten Druck (p2) im Bereich von 100 bis 200 bar durchgeführt werden.

## Revendications

1. Carte multicouche comprenant :
un support central (10) comprenant une couche centrale (3) et deux couches intermédiaires (4, 5), chacune adhérant à une surface (σI, σII) respective de la couche centrale (3) ;
deux couches périphériques (6, 7), chacune adhérant à une surface (σI, σII) respective du support central (10) ; et
deux couches extérieures (8, 9), chacune adhérant à une surface (σI, σII) respective d'une couche périphérique (6, 7) respective ;
la carte multicouche est **caractérisée en ce que** la couche centrale (3) est dotée d'une antenne (22) et **en ce que** les deux couches intermédiaires (4, 5), les deux couches périphériques (6, 7) et les deux couches extérieures (8, 9) sont constituées de polyéthylène téréphtalate recyclé modifié par glycol.

2. Carte selon la revendication 1, dans laquelle la couche centrale (3) est constituée de polyéthylène téréphtalate recyclé modifié par glycol et présente une première épaisseur initiale (S1) dans une plage de 25 à 150 µ, de préférence d'environ 40 µm, et l'antenne (22) est constituée d'aluminium ou de cuivre.

3. Carte selon la revendication 1, dans laquelle la couche centrale (3) est constituée de polyester et présente une première épaisseur initiale (S1) dans une plage de 25 à 150 µm, de préférence d'environ 40 µm, et l'antenne (22) est constituée d'aluminium ou de cuivre.

4. Carte selon l'une quelconque des revendications 1 à 3, dans laquelle chaque couche périphérique (6, 7) présente une deuxième épaisseur initiale dans une plage de 200 à 250 µm, de préférence d'environ 220 pm.

5. Carte selon l'une quelconque des revendications 1 à 3, dans laquelle les deux couches périphériques (6, 7) comprennent des pigments blancs, en particulier du dioxyde de titane.

6. Carte selon l'une quelconque des revendications 1 à 5, dans laquelle chaque couche intermédiaire (4, 5) et chaque couche extérieure (8, 9) présentent une troisième épaisseur initiale (S3) dans une plage de 65 à 105 µm, de préférence d'environ 85 pm.

7. Carte selon l'une quelconque des revendications 1 à 6, dans laquelle les deux couches intermédiaires (4, 5) et les deux couches extérieures (8, 9) sont dotées d'un adhésif activé par la chaleur qui, en particulier, peut être activé à une température (T1, T2) d'au moins 90 °C.

8. Carte selon l'une quelconque des revendications 1 à 7, dans laquelle les deux couches périphériques (6, 7) ont une surface (σI, σII) sur laquelle une impression est appliquée ; tandis que les deux couches intermédiaires (4, 5) et les deux couches extérieures (8, 9) sont transparentes.

9. Carte selon l'une quelconque des revendications 1 à 8 et comprenant une micropuce (20) et/ou une bande magnétique (21).

10. Méthode de fabrication d'une carte selon l'une quelconque des revendications 1 à 9 ; la méthode comprend les étapes suivantes :
la fourniture d'une couche centrale (3) dotée d'une antenne (22) et de deux couches intermédiaires (4, 5), chacune agencée sur une surface (σI, σII) respective de la couche centrale (3) ; les deux couches intermédiaires (4, 5) sont constituées de polyéthylène téréphtalate recyclé modifié par glycol ;
la réalisation d'un prélaminage de la couche centrale (3) et des deux couches intermédiaires (4, 5) de manière à obtenir un support central (10) ;
le placement de deux couches périphériques (6, 7), chacune agencée sur une surface (σI, σII) respective du support central (10) ; les deux couches périphériques (6, 7) sont constituées de polyéthylène téréphtalate recyclé modifié par glycol ;
le placement de deux couches extérieures (8, 9), chacune agencée sur une couche périphérique (6, 7) respective ; dans laquelle les deux couches extérieures (8, 9) sont constituées de polyéthylène téréphtalate recyclé modifié par glycol ;
la réalisation d'un laminage final de toutes les couches de matériau (3, 4, 5, 6, 7, 8, 9).

11. Méthode selon la revendication 10, dans laquelle l'étape de prélaminage comprend une autre sous-étape de liaison, en particulier au moyen d'un soudage par ultrasons, de la couche centrale (3) et des deux couches intermédiaires (4, 5) les unes aux autres avant la réalisation du prélaminage ; et l'étape de laminage final comprend une autre sous-étape de liaison, en particulier au moyen d'un soudage par ultrasons, de toutes les couches de matériau (3, 4, 5, 6, 7, 8, 9) les unes aux autres avant la réalisation du laminage final.

12. Méthode selon la revendication 10 ou 11 et comprenant une autre étape d'alimentation de la couche centrale (3) et des deux couches périphériques (6, 7) en feuilles.

13. Méthode selon l'une quelconque des revendications 10 à 12 et comprenant une autre étape d'alimentation des deux couches intermédiaires (4, 5) et des deux couches extérieures (8, 9) en feuilles ou sous forme d'une bande de matériau déroulée d'une bobine.

14. Méthode selon l'une quelconque des revendications 10 à 13 et comprenant l'autre étape de séparation de chaque carte (1) individuelle.

15. Méthode selon l'une quelconque des revendications 10 à 14, dans laquelle l'étape de prélaminage et/ou l'étape de laminage final sont réalisées avec un premier étage à une première température (T1) dans une plage de 90 à 140 °C et à une première pression (p1) dans une plage de 60 à 150 bars et avec un deuxième étage suivant un refroidissement à une deuxième température (T2) dans une plage de 15 à 40 °C, de préférence de 20 °C, avec une deuxième pression (p2) dans une plage de 100 à 200 bars.
